# EUROPEAN PATENT APPLICATION

(11) **EP 4 582 202 A1**
(43) Date of publication of application: **09.07.2025**
(21) Application number: 24150347.3
(22) Date of filing: 04.01.2024
(51) Int. Cl.: B23B 49/00, B23B 51/00

(54) **A DRILL, A METHOD FOR PRODUCING A DRILL AND USE OF SUCH A DRILL**

(71) Applicant: AB Sandvik Coromant, 811 81 Sandviken (SE)
(72) Inventor: Roberts, Graham, 811 81 Sandviken (SE); Royer, Raphael, 811 81 Sandviken (SE); Limb, John, 811 81 Sandviken (SE)
(74) Representative: Sandvik

(57) **Abstract**

The present invention relates to a drill (1) comprising a front end (2) with a drill tip, an opposite rear end (3), a shank portion (4), a drill body portion (5) and at least one flute (6). The drill further comprises at least one marking (7a-b) arranged at a position on the drill body portion enabling determination of whether a condition for proper use of the drill is met during a use thereof. The invention also relates to a method for producing as well as use of such a drill.

## Description

### TECHNICAL FIELD OF THE INVENTION

The present invention belongs to the technical field of metal cutting. More specifically the present invention belongs to the field of drilling tools or drills and especially, but not exclusively, solid carbide drills.

### BACKGROUND OF THE INVENTION AND PRIOR ART

The present invention relates to a drill according to the preamble of claim 1 as well as a method for producing a drill according to the preamble of claim 11.

More specifically, the invention relates to a drill comprising a front end comprising a drill tip, a rear end opposite the front end, a rotational axis of the drill extending between the front and rear ends thereof, a shank portion adjacent to the rear end and configured for attachment to a machine tool, a drill body portion extending between the front end and the shank portion, at least one flute extending from the front end along the drill body portion towards the shank portion, and at least one marking at a fixed position along the rotational axis on the drill body portion.

Such a drill is already known from any of the documents FR 2851945 A1, DE 19950390 A1 and US 4904130 A, each of which showing a solid carbide drill with markings intended to indicate a depth of the bore during a drilling operation, or drilling depth, by being positioned at specific length intervals to the tip of the drill.

One common problem by use of drills of this type is that the drill is driven too deep into the workpiece, i.e. deeper than the drill is suitable for, which impairs the drilling performance, for instance due to unsatisfactory chip evacuation, and may even result in damage of the drill and/or workpiece.

The maximum drilling depth is particularly difficult to keep track of on solid carbide drills, which are usually reconditioned several times during their service life by re-grinding the drill tip, whereby the length of the drill is reduced and thus also the maximum drilling capability.

Another problem with drills of this type is that it is difficult for a user to keep track of how much the drill tip / length of the drill has been reduced by abrasion from drilling and grinding, and the fact that the maximum grinding margin differs from drill to drill does not make this any less problematic. Here, too, there is a risk that the drill performance will deteriorate and that the drill and/or workpiece will be damaged if the drill length is reduced more than appropriate.

Thus, a main problem with previously known drills and especially reconditionable solid carbide drills is that there is a risk that the user uses the drill in an inappropriate way, i.e. in a way the drill is not intended for with regard to drilling performance and durability.

### SUMMARY OF THE INVENTION

The object of the present invention is to provide a drill of the type defined in the introduction being improved in at least some aspect, and especially which provide a reduced risk of inappropriate use thereof, with respect to such drills already known, for instance through any of the above-mentioned documents.

This object is according to the invention obtained by providing such a drill by which said at least one marking is arranged at a said position enabling determination of whether a condition for proper use of the drill is met during a use of the drill.

Such a marking provides a visual aid to a machine operator regarding how to use the drill in a proper way, i.e. in a way for which the drill is manufactured, so as to maintain maximum drilling performance and minimizing the risk of damage to the drill or workpiece. Hence, the operator may by means of said marking keep track of, during use of the drill, if a condition for proper use is met or not, and thereby adapt said use to make sure said condition is met and thereby the maximum capability of the drill utilized. Such a marking according to the invention could be used as aid to indicate conditions of proper use of many different types, such as a maximum drilling depth or a maximum reconditionable length of the drill tip, as a few examples.

According to an embodiment of the invention said at least one marking is arranged at a said position selected to ensure that a use parameter of a part of the drill reaching from said front end to said position is at a level ensuring that a condition for proper use of the drill is met. By such a marking indicating a limit for use of the drill in respect of a said use parameter it is possible to easily ensure that the drill is used within the intended limit values.

According to another embodiment of the invention said position is selected based on the geometry of the drill between the marking and the front end of the drill with respect to at least one characteristic. By defining said position for said marking based on the geometry of the drill it is possible to very accurately select a position for the marking that ensures that the limits for proper use of the drill are not exceeded.

According to another embodiment of the invention said use parameter is a drilling depth. By using drilling depth as a said use parameter a simple and effective aid for an operator to avoid that the drill is used to drill too deep into the workpiece is achieved through said marking.

According to another embodiment of the invention said at least one characteristic is a design of the at least one flute. By basing said position on the design of the at least one flute said marking constitutes an effective aid for the operator to ensure that the drill is used in a proper way with regard to the evacuation of chips.

According to another embodiment of the invention said use parameter is abrasion of the drill tip. By using abrasion of the drill tip as a mentioned use parameter said marking provides a simple and effective aid for an operator to avoid re-grinding the drill so much that its intended performance can no longer be maintained.

According to another embodiment of the invention said at least one characteristic is a design of the drill tip. By basing said position on the design of the drill tip said marking can be arranged to constitute an effective aid for the operator to ensure that the drill is used in proper way with respect to reconditioning the drill by grinding the tip thereof.

According to another embodiment of the invention the drill comprises two said markings arranged at a distance to each other in a direction along the rotational axis of the drill, that a first of said markings has a drilling depth as said use parameter of the drill and that a second of said markings has abrasion of the drill tip as said use parameter of the drill. By using two said markings, the ability of the operator to ensure that the drill is used in proper way increases even further.

According to another embodiment of the invention said position of the first marking is selected based on a said characteristic in the form of a design of the at least one flute and that said position of the second marking is selected based on a said characteristic in the form of a design of the drill tip.

According to another embodiment of the invention the drill is a solid carbide drill. The invention is especially useful by a solid carbide drill which is intended to be reconditioned by re-grinding of the drill tip as the problems the invention aims to solve are are bigger by drills of this type.

According to another embodiment of the invention said at least one marking is arranged to give an information that is permanent.

This means that the aid said marking gives to the operator to make sure the drill is used in a proper way is invariable and independent of the use of the drill, i.e. of wear from drilling or shortening of the length by re-grinding the drill tip.

The invention also relates to a method for producing a drill and use of a drill according to the appended independent claims thereof. Realizations of, and advantages with, such a method and use clearly appears from the above and following description of embodiments of a drill according to the invention.

A method for producing a drill according to the invention comprises the steps of:
a) Providing a drill to be marked, comprising,
   - a front end comprising a drill tip,
   - a rear end opposite the front end,
   - a rotational axis of the drill extending between the front and rear ends thereof,
   - a shank portion adjacent to the rear end and configured for attachment to a machine tool,
   - a drill body portion extending between the front end and the shank portion, and
   - at least one flute extending from the front end along the drill body portion towards the shank portion, and
b) Applying at least one marking, at a fixed position along the rotational axis, on the drill body portion,
   and the additional step a-2) of:
   a-2) Selecting a position on the drill body portion for said at least one marking to be applied such that it enables determination of whether a condition for proper use of the drill is met during a use of the drill.

According to an embodiment of the method according to the invention step a-2) further comprises selecting a said position such as to ensure that a use parameter of a part of the drill reaching from said front end to said position is at a level ensuring that a condition for proper use of the drill is met.

According to another embodiment of the method according to the invention said use parameter is a drilling depth.

According to another embodiment of the method according to the invention said use parameter is abrasion of the drill tip.

According to another embodiment of the method according to the invention the position is selected based on the geometry of the drill between the marking to be applied and the front end of the drill with respect to at least one characteristic.

According to another embodiment of the method according to the invention said at least one characteristic is a design of the at least one flute.

According to another embodiment of the method according to the invention said at least one characteristic is a design of the drill tip.

According to another embodiment of the method according to the invention step b) comprises applying two markings, at fixed positions and at a distance to each other along the rotational axis of the drill, on the drill body portion, and step a-2) comprises selecting a position on the drill body portion for each said marking to be applied such that it enables determination of whether a condition for proper use of the drill is met during a use of the drill.

According to another embodiment of the method according to the invention a first of said markings has a drilling depth as said use parameter of the drill and a second of said markings has abrasion of the drill tip as said use parameter of the drill.

According to another embodiment of the method according to the invention said position of the first marking is selected based on a said characteristic in the form of a design of the at least one flute and said position of the second marking is selected based on a said characteristic in the form of a design of the drill tip.

According to another embodiment of the method according to the invention step a-2) comprises applying said at least one marking by use of laser.

According to another embodiment of the method according to the invention step a-2) comprises selecting a position for said at least one marking to be applied by evaluating which is smaller of the two values A and B:
A: Nominal drilling depth for the drill, and
B: The distance between the position where the cross-sectional area of the at least one flute starts to decrease towards a rear end of the flute and the drill tip; and
Selecting the position based on the smaller value.

According to another embodiment of the method according to the invention step a-2) comprises selecting a position for said at least one marking to be applied by comparing a nominal cut diameter of the drill with the cut diameter of the drill tip at subsequent positions in a direction along the rotational axis from the forwardmost point of the drill tip towards the rear end of the drill until the diameter of the drill tip is smaller than the nominal cut diameter by at least a given value, and selecting the position directly before said position with the smaller diameter as the position for said at least one marking to be applied.

Further advantages and advantageous features of the invention will appear from the following detailed description of embodiments thereof.

### BRIEF DESCRIPTION OF THE DRAWINGS

With reference to the appended drawings, below follows a specific description of embodiments of the invention cited as examples.

In the drawings:
- Fig. 1: is a perspective view obliquely from above of a drill according to an embodiment of the invention provided with two said markings,
- Fig. 2: is a perspective view obliquely from below of the drill of Fig. 1,
- Fig. 3: is a side-elevation view of the drill of Fig. 1,
- Fig. 4: is a sectional side-elevation view of the drill of Fig. 1 as seen in the section indicated "A" in Fig. 3, and
- Fig. 5: is a flowchart illustrating a method for producing a drill according to an embodiment of the invention.

### DETAILED DESCRIPTION OF EMBODIMENTS OF THE INVENTION

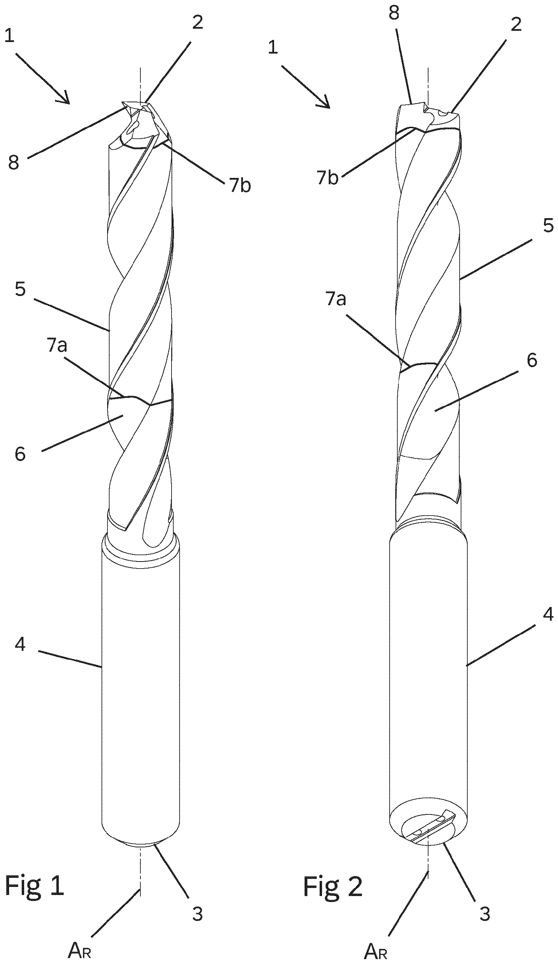

A drill 1 according to an embodiment of the invention is illustrated in Figs. 1-4 and will now be described while at the same time making reference to all these drawings.

The drill 1 is a solid carbide drill intended to be used in an industrial drilling machine or other machine with drilling function, such as a multi-task CNC machine.

The drill 1 comprises a front end 2 and an opposite rear end 3. The front end comprises a drill tip with cutting edges 8 by means of which the drill is configured to cut into the material of a workpiece, by rotation of the drill around a rotational axis A_{R} extending between the front 2 and rear 3 ends thereof, during a drilling operation for cutting a hole in the workpiece.

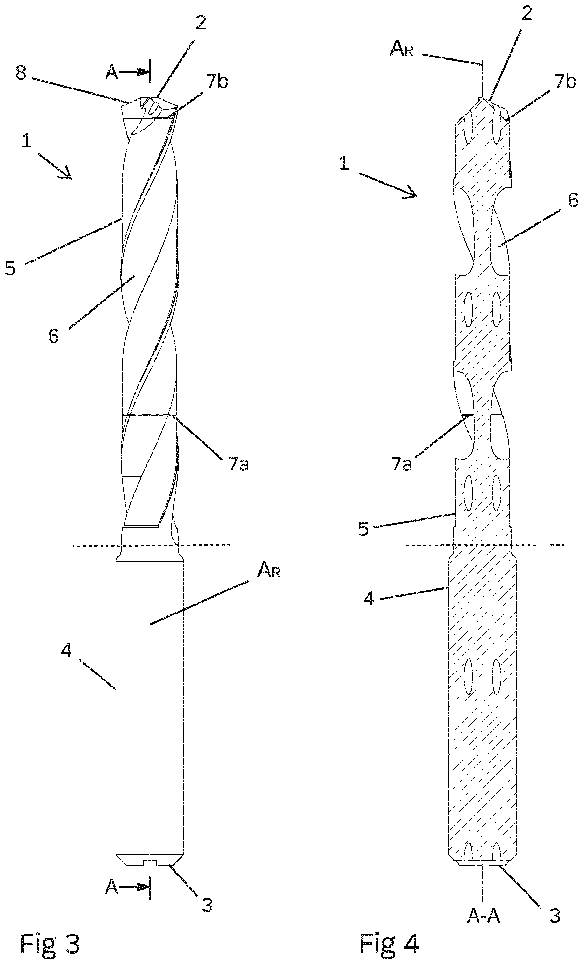

The drill 1 comprises a shank portion 4 adjacent to the rear end 3 and configured for attachment to the machine, i.e. the drill is configured to be clamped and held by the drilling machine by the shank portion during a drilling operation. The drill further comprises a drill body portion 5 extending between the front end 2 and the shank portion 4 and more specifically between a rear end of flutes 6, extending from the front end 2 along the drill body portion 5 towards the shank portion 4, and the forwardmost point of the drill tip. A border between the shank 4 and drill body 5 portion is schematically illustrated by a dotted line in Figs. 3 and 4, for explanatory purposes.

The flutes 6 are curved grooves in the peripheral surface of the drill, extending along the rotational axis A_{R} thereof, from a front end of a respective flute adjacent to or at the front end 2 of the drill to a rear end of the flute adjacent to the shank portion 4. The flutes are designed to allow chips of material and possibly also coolant and lubricant to be evacuated from the hole being drilled. The number of flutes 6 is in the embodiment shown two, but a drill 1 according to the invention could have only one flute, and also more than two. Furthermore, the flutes 6 may have another shape than those helical flutes shown, such as being completely straight.

The drill 1 further comprises a first marking 7a arranged at a fixed position along the rotational axis A_{R}, i.e. along a longitudinal extension of the drill, on the drill body portion 5. The marking may be applied to the drill body portion by use of laser or by grinding, as a few examples. Said first marking 7a is more particularly arranged at a said position enabling determination of whether a condition for proper use of the drill 1 is met during a use of the drill.

"Proper use" shall in this regard be interpreted as use in a manner for which the drill 1 is made and intended, while maintaining maximum performance and minimizing the risk of damage to the drill or workpiece. A condition for proper use thus states that use of the drill with respect to at least one use parameter should be at a specific value or at a specific side of a given threshold.

For the first marking 7a said use parameter is a drilling depth and the marking hence indicates a maximum drilling depth allowed by use of the drill 1, at which it is ensured that the drilling performance will be as intended and that no risk for damage of the drill or workpiece is present. Accordingly, the first marking 7a is arranged at a said position making it possible for an operator of the drilling machine in which the drill 1 is used to, during use of the drill - for instance by performing a drilling operation, determine whether a condition for proper use of the drill is met, that is - whether the drilling depth is on an acceptable level, as is the case if the first marking 7a is visible for the operator, i.e. not driven into and hidden in the workpiece. The use parameter "drilling depth" is accordingly at a level ensuring that said condition for proper use of the drill 1 is met at a part of the drill 1 reaching from said front end 2 to said position of the first marking 7a, or the other way around, from the first marking 7a forwardly to the forwardmost end point of the drill.

The position for the first marking 7a indicating the maximum drilling depth of the drill 1 is determined and selected based on the geometry of the drill between the marking 7a and the front end 2 thereof, with respect to at least one characteristic. The main characteristic of the geometry of the drill 1 defining an actual maximum drilling depth allowed before drilling performance deteriorates is the design of the flute or flutes 6 and more specifically the cross-sectional shape or area of each flute defining its ability to evacuate chips from the hole being drilled. The position for the first marking 7a could be defined solely based on this characteristic, or by taking one or more further into consideration. The determination of the position for the first marking 7a is further described in the below description of a method for producing a drill 1 according to the invention.

The drill 1 further comprises a second said marking 7b arranged at another said fixed position at a distance to the position of the first marking 7a in a direction along the rotational axis A_{R}, i.e. along the longitudinal extension of the drill 1, and namely at the drill tip.

Said second marking 7b is more particularly arranged at a said position enabling determination of whether another condition for proper use of the drill 1 is met during a use of the drill.

For the second marking 7a said use parameter is abrasion of the drill tip and the marking hence indicates a limit for maximum reduction of the drill tip - and thereby drill - length during use of the drill 1, by abrasion of material by wear during drilling or by re-grinding the drill tip, i.e. reconditioning of the drill to restore its original performance after a period of wear, before there is a risk that original/intended functionality is impacted. Or more specifically, if the drill is not reduced in length beyond the position of said second marking 7b it is ensured that the drilling performance will be as intended and that no risk for damage of the drill or workpiece is present. Accordingly, the second marking 7b is arranged at a said position making it possible for an operator of the drilling machine in which the drill 1 is used to, during use of the drill - for instance by performing a drilling operation or, and especially, by re-grinding the drill tip, determine whether a condition for proper use of the drill is met, that is - whether the abrasion of the drill tip is on an acceptable level, as is the case if the second marking 7b is visible for the operator, i.e. not worn or grinded away. The use parameter "abrasion of the drill tip" is accordingly at a level ensuring that said condition for proper use of the drill 1 is met at a part of the drill 1 reaching from the forwardmost point of said front end 2 to said position of the second marking 7b, or the other way around, from the second marking 7b forwardly to the forwardmost point of the drill.

The position for the second marking 7b indicating the maximum abrasable or reconditionable length of the drill 1 is determined and selected based on the geometry of the drill between the marking 7b and the front end 2 thereof, with respect to at least one characteristic. The main characteristic of the geometry of the drill 1 defining an actual maximum abrasable or reconditionable length allowed before drilling performance deteriorates is the design of the drill tip and more specifically the cut diameter of the drill tip defining the diameter of a hole to be drilled, meaning that a reduction of the diameter of the drill tip due to shortening, for instance re-grinding, of the drill would result in that a hole being drilled would be smaller than the nominal diameter indicated by the drill manufacturer. The position for the second marking 7b could be defined solely based on this characteristic, or by taking one or more further into consideration, such as body clearance, web clearance or body taper, to mention a few examples. The determination of the position for the second marking 7b is further described in the below description of a method for producing a drill 1 according to the invention.

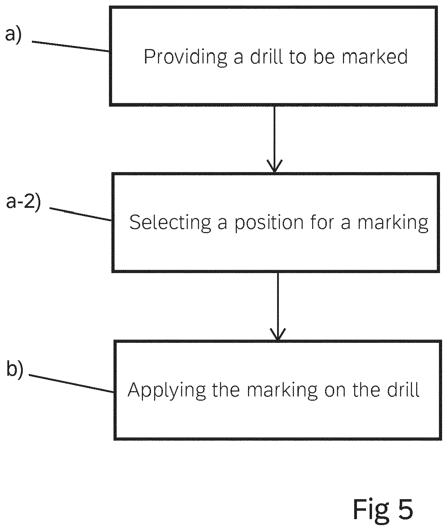

Now, a method for producing a drill 1 according to an embodiment of the invention is to be described. The steps of this method is illustrated in the flowchart of Fig. 5. As a drill 1 produced by such a method may be the drill according to the invention as described above, all features of the drill already described is not described in detail again in the description of the method hereunder.

The method comprises a step (a)) of:
a) Providing a drill 1 to be marked, comprising,
   - a front end 2 comprising a drill tip,
   - a rear end 3 opposite the front end 2,
   - a rotational axis A_{R} of the drill 1 extending between the front 2 and rear 3 ends thereof,
   - a shank portion 4 adjacent to the rear end 3 and configured for attachment to a machine tool,
   - a drill body portion 5 extending between the front end 2 and the shank portion 4, and
   - at least one flute 6 extending from the front end 2 along the drill body portion 5 towards the shank portion 4.

The method further comprises a step (a-2)) of:
a-2) Selecting a position on the drill body portion 5 for a first marking 7a to be applied such that it enables determination of whether a condition for proper use of the drill 1 is met during a use of the drill 1.

More specifically, step a-2) includes selecting a said position such as to ensure that a use parameter of a part of the drill 1 reaching from said front end 2 to said position is at a level ensuring that a condition for proper use of the drill 1 is met, and said use parameter for the first marking 7a is a drilling depth.

Even more specifically, in step a-2) the position for the first marking 7a is selected based on the geometry of the drill 1 between the first marking to be applied and the front end 2 of the drill with respect to at least one characteristic, in the form of a design of the at least one flute.

In further detail, the position for the first marking 7a to be applied is determined and selected in step a-2) by evaluating which is smaller of the two values A and B:
A: Nominal drilling depth for the drill 1, or
B: The distance between the position where the cross-sectional area of the at least one, in the embodiment shown two, flutes 6 starts to decrease towards a rear end of the flutes and the drill tip; and then selecting the position for the first marking 7a based on the smaller value. If said positions where the cross-sectional area of the flutes starts to decrease are not the same for all flutes, in the case of at least two flutes, the position defining the shortest said distance to the drill tip is used as said position in B.

The nominal drilling depth for a drill is stated by most drill manufacturers and basically says how deep the specific drill may be driven into the workpiece before the cutting forces become so great that there is a risk that the drill is damaged or even broken. However, the nominal drilling depth does not take into account other aspects related to the performance of the drill, such as chip evacuation, meaning that this value alone may not be used to determine a suitable drilling depth during a cutting operation, i.e. it does not give instructions for proper use of the drill. Furthermore, the information of the nominal drilling depth is only correct before the first time the drill is used, as after that the tip of the drill is worn down to some extent and the nominal drilling depth, measured from the forwardmost point of the drill backwards towards the rear end, will show another position to which the drill may be driven into the workpiece, which is incorrect due to that the starting point for the drilling depth / length measurement has moved backwards. The nominal drilling depth is commonly indicated for instance 3xD, 4xD, 5xD etc, where the nominal drilling depth of a 5xD drill with a diameter of 6.8 mm would be 5 x 6.8 = 34 mm, as an example.

A flute 6 of a drill of this type commonly has a continuous cross-sectional area over a great part of the drill body portion, which starts to decrease at a position close to the rear end of the flute, from which position the cross-sectional area continuously decreases towards the rear end of the flute until the flute merges with a cylindrical peripheral surface of the drill at the transition between the drill body portion 5 and the shank portion 4.

Accordingly, it is evaluated in step a-2) of the method according to the invention which is smaller of the nominal drilling depth for the drill or the distance between said position where the cross-sectional area of the at least one flute 6 starts to decrease towards a rear end of the flutes and the drill tip, i.e. which of an end position of the nominal drilling depth measured from the forwardmost point of the drill tip backwards, and the position where the at least one flute 6 starts to decrease, is located closest to the drill tip as seen in a direction of the rotational axis A_{R}, and then this position is selected as the position for the first marking 7a, i.e. at which the first marking should be applied. By this evaluation and determination of the position for the first marking it is ensured that the first marking 7a enables determination of whether a condition for proper use of the drill 1 is met during a use of the drill 1. In other words, the first marking 7a indicates a maximum drilling depth allowed within proper use of the drill, taking both drill performance and strength/durability into consideration.

The method further comprises a step (b)) of:
b) Applying the first marking 7a at said selected position along the rotational axis A_{R} on the drill body portion 5.

The method further comprises:
Selecting a position on the drill body portion 5 for a second marking 7b to be applied such that it enables determination of whether a condition for proper use of the drill 1 is met during a use of the drill 1.

More specifically, the method includes selecting a said position such as to ensure that a use parameter of a part of the drill 1 reaching from said front end 2 to said position is at a level ensuring that a condition for proper use of the drill 1 is met, and said use parameter for the second marking 7b is abrasion of the drill tip.

Even more specifically, the position for the second marking 7b is selected based on the geometry of the drill 1 between the second marking to be applied and the front end 2, i.e. the forwardmost end, of the drill with respect to at least one characteristic, in the form of a design of the drill tip.

In further detail, the position for the second marking 7b to be applied is determined and selected by comparing a nominal cut diameter of the drill with the cut diameter of the drill tip at subsequent positions, i.e. the diameter is measured continuously or at short length intervals along the drill tip, in a direction along the rotational axis from the forwardmost point of the drill tip towards the rear end of the drill, until the diameter of the drill tip is smaller than the nominal cut diameter by at least a given value, such as smaller by at least 10 or 15 microns, and selecting the position directly before said position with the smaller diameter, as the position for said at least one marking to be applied. Accordingly, the position for the second marking 7b is selected to be located as far away from the forwardmost end of the drill tip while maintaining a diameter at said position equivalent or at least substantially equivalent to the nominal cut diameter, i.e. the diameter of a hole drilled by the drill according to the specifications of the drill from the manufacturer, so that it is ensured that a hole to be drilled will have a diameter consistent with said specifications even if the drill tip is worn and reconditioned down to said second marking 7b.

The method further comprises applying the second marking 7b at said selected position along the rotational axis A_{R} on the drill body portion 5.

It should be clear that the selecting and applying of the first 7a and second 7b markings may be performed simultaneously, in the same method step, or subsequent to each other. That is, the position for one of the two markings may be selected in step a-2) and this marking applied in step b), whereafter the position for the other marking is selected in a step a-2) and this marking applied in a step b), i.e. the steps a-2) and b) are repeated for applying the two markings, or the positions for both markings 7a-b are selected in step a-2) whereafter both markings are applied in step b). Furthermore, it is also possible to first perform the steps a-2) and b) to apply one or more markings on a drill blank, and thereafter process the blank by grinding of flutes 6, cutting edges 8 etc, i.e. the one or more markings may be applied to the drill to be produced before the other features thereof as mentioned in step a).

The one or more markings 7a-b may be applied by use of laser or by grinding, as a few examples. Furthermore, said markings of a drill according to the invention, or to be applied to a drill in a method of producing a drill according to the invention, do not have to be constituted by lines extending around the peripheral surface of the drill, as shown in the drawings, but each marking may independently be constituted by one or more dots, a shorter line or by the border of a colored area of the drill, to mention a few examples.

Only one of said first 7a and second 7b markings may be provided on a drill 1 according to the invention, and such a drill may also be included with other said markings, connected with other conditions for proper use than those mentioned.

Accordingly, a drill 1 is provided which is provided with markings 7a-b which each in itself and with no further information enables determination of whether a condition for proper use of the drill is met during a use of the drill, and in other words, indicates how the drill should be used within the limits for "proper use" defined by the structure and geometry of the drill.

More specifically, a first marking 7a on the outer diameter of the drill indicates the maximum drilling depth the drill can achieve. This marking provides a visual aid to a machine operator to the maximum capability of the drill before performance is adversely affected by a risk of damage and/or poor chip evacuation if drilling is performed deeper than the first marking. This is especially useful after reconditioning of the drill, when the drill length is reduced from the forwardmost point, whereby the maximum drilling depth length (measured from the new forwardmost point) is also reduced. The length reduction by reconditioning varies a lot, so the visual aid of such a first marking 7a will help the operator know the exact capability both before and after reconditioning, as the information of the maximum drilling depth provided by the first marking is exact and permanent, i.e. not affected by reduction of the drill length during use of the drill.

For drills already known and on the market today, the maximum drilling depth length is often printed on the tool label. Most of the time this value is not true. The maximum drilling depth on the label commonly includes some allowance for reconditioning, which means that at first, the actual maximum drilling depth is greater than that stated, after some use it may be correct at some moment in time and thereafter the label will state a maximum drilling depth length which is greater than the actual maximum drilling depth, due to the worn and reconditioned shortened drill. Hence, the first marking 7a of the drill according to the invention will be a great aid for the machine operator striving to use the drill in a proper way.

A second marking 7b described is provided at the drill tip and indicates a position where the tool cannot be reconditioned past without impacting original performance.

As already described, solid carbide drills are reconditionable by re-grinding the endface geometry. The re-grinding reduces the overall length of a drill each time by a different amount, depending on the wear on the margins, and other factors. It is not a practice of drill manufacturers to communicate to the customers how much length of a drill is reconditionable, before original functionality is impacted. For this reason, such a second marking 7b of the drill 1 according to the invention means a visual aid to a machine operator of the exact reconditionable length of the drill at all times, i.e. even after a first reconditioning process, making it possible for the operator to determine how the drill should be used while maintaining the maximum drilling performance achievable.

The invention also relates to use of a drill according to the invention for drilling a hole in a workpiece. Advantages of such a use over the use of drills already known should be absolutely clear from the above description of a drill and method according to the invention.

The invention is of course not in any way restricted to the embodiments thereof described above. On the contrary, many possibilities to modifications thereof will be apparent to a person with ordinary skill in the art without departing from the basic idea of the invention such as defined in the appended claims.

## Claims

1. A drill (1) comprising,
- a front end (2) comprising a drill tip,
- a rear end (3) opposite the front end (2),
- a rotational axis (A_{R}) of the drill (1) extending between the front (2) and rear (3) ends thereof,
- a shank portion (4) adjacent to the rear end (3) and configured for attachment to a machine tool,
- a drill body portion (5) extending between the front end (2) and the shank portion (4),
- at least one flute (6) extending from the front end (2) along the drill body portion (5) towards the shank portion (4), and
- at least one marking (7a-b), at a fixed position along the rotational axis (A_{R}), on the drill body portion (5),
***characterized* in that** said at least one marking (7a-b) is arranged at a said position enabling determination of whether a condition for proper use of the drill (1) is met during a use of the drill (1).

2. A drill (1) according to claim 1, ***characterized* in that** said at least one marking (7a-b) is arranged at a said position selected to ensure that a use parameter of a part of the drill (1) reaching from said front end (2) to said position is at a level ensuring that a condition for proper use of the drill (1) is met.

3. A drill (1) according to claim 1 or 2, ***characterized* in that** said position is selected based on the geometry of the drill (1) between the marking (7a-b) and the front end (2) of the drill (1) with respect to at least one characteristic.

4. A drill (1) according to claim 2 or 3 when dependent on claim 2, ***characterized* in that** said use parameter is a drilling depth.

5. A drill according to claim 3 or 4 when dependent on claim 3, ***characterized* in that** said at least one characteristic is a design of the at least one flute (6).

6. A drill (1) according to claim 2 or 3 when dependent on claim 2, ***characterized* in that** said use parameter is abrasion of the drill tip.

7. A drill according to claim 3 or 6 when dependent on claim 3, ***characterized* in that** said at least one characteristic is a design of the drill tip.

8. A drill (1) according to claim 2 or 3 when dependent on claim 2, ***characterized* in that** the drill (1) comprises two said markings (7a-b) arranged at a distance to each other in a direction along the rotational axis (A_{R}) of the drill (1), that a first (7a) of said markings (7a-b) has a drilling depth as said use parameter of the drill (1) and that a second (7b) of said markings (7a-b) has abrasion of the drill tip as said use parameter of the drill (1).

9. A drill (1) according to claim 8 when dependent on claim 3, ***characterized* in that** said position of the first marking (7a) is selected based on a said characteristic in the form of a design of the at least one flute (6) and that said position of the second marking (7b) is selected based on a said characteristic in the form of a design of the drill tip.

10. A drill (1) according to any of the preceding claims, ***characterized* in that** the drill (1) is a solid carbide drill.

11. A method for producing a drill (1), comprising the steps of:
a) Providing a drill (1) to be marked, comprising,
- a front end (2) comprising a drill tip,
- a rear end (3) opposite the front end (2),
- a rotational axis (A_{R}) of the drill (1) extending between the front (2) and rear (3) ends thereof,
- a shank portion (4) adjacent to the rear end (3) and configured for attachment to a machine tool,
- a drill body portion (5) extending between the front end (2) and the shank portion (4), and
- at least one flute (6) extending from the front end (2) along the drill body portion (5) towards the shank portion (4), and
b) Applying at least one marking (7a-b), at a fixed position along the rotational axis (A_{R}), on the drill body portion (5),
***characterized* in that** the method further comprises the step a-2) of:
a-2) Selecting a position on the drill body portion (5) for said at least one marking (7a-b) to be applied such that it enables determination of whether a condition for proper use of the drill (1) is met during a use of the drill (1).

12. A method according to claim 11, ***characterized* in that** step a-2) further comprises selecting a said position such as to ensure that a use parameter of a part of the drill (1) reaching from said front end (2) to said position is at a level ensuring that a condition for proper use of the drill (1) is met.

13. A method according to claim 12, ***characterized* in that** said use parameter is a drilling depth.

14. A method according to claim 12, ***characterized* in that** said use parameter is abrasion of the drill tip.

15. Use of a drill (1) according to any of the claims 1-10 in an industrial drilling machine for drilling a hole in a workpiece.
